(19) Europäisches Patentamt
European Patent Office
Office européen des brevets

(11) EP 1 205 998 A2

(12) # EUROPÄISCHE PATENTANMELDUNG

(43) Veröffentlichungstag:
**15.05.2002 Patentblatt 2002/20**

(51) Int Cl.[7]: **H01M 10/40**, H01B 1/12, H01G 9/02, C07F 9/28

(21) Anmeldenummer: **01124178.3**

(22) Anmeldetag: **11.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **10.11.2000 DE 10055812**
**23.11.2000 DE 10058264**

(71) Anmelder: **Merck Patent GmbH**
**64293 Darmstadt (DE)**

(72) Erfinder:
- **Schmidt, Michael, Dr.**
**64331 Weiterstadt (DE)**
- **Ott, Frank, Dr.**
**64347 Griesheim (DE)**
- **Jungnitz, Michael**
**63225 Langen (DE)**
- **Ignatyev, Nicolai**
**47058 Duisburg (DE)**
- **Kühner, Andreas, Dr.**
**64289 Darmstadt (DE)**

(74) Vertreter: **Wolff, Felix, Dr. et al**
**Kutzenberger & Wolff**
**Theodor-Heuss-Ring 23**
**50668 Köln (DE)**

(54) **Elektrolyte**

(57) Die vorliegende Erfindung betrifft Gemische aus Fluoroalkylphosphat-Salzen und Polymeren, Verfahren zu ihrer Herstellung sowie deren Verwendung in Elektrolyten, Batterien, Kondensatoren, Superkondensatoren und galvanischen Zellen.

EP 1 205 998 A2

## Beschreibung

Die vorliegende Erfindung betrifft Gemische aus Fluoroalkylphosphat-Salzen und Polymeren, Verfahren zu ihrer Herstellung sowie deren Verwendung in Elektrolyten, Batterien, Kondensatoren, Superkondensatoren und galvanischen Zellen.

Die Verbreitung von tragbaren elektronischen Geräten, wie z.B. Laptop- und Palmtop-Computern, Mobiltelefonen oder Videokameras und damit auch der Bedarf nach leichten und leistungsfähigen Batterien hat in den letzten Jahren weltweit dramatisch zugenommen.

Angesichts dieses sprunghaft gestiegenen Bedarfs nach Batterien und den damit verbundenen ökologischen Problemen kommt der Entwicklung von wiederaufladbaren Batterien mit einer langen Lebensdauer und hoher Leistung eine stetig wachsende Bedeutung zu.

Insbesondere die Qualität der Elektrolyte ist dabei von großem Einfluß auf die Lebensdauer und Leistung der Batterien, so daß es in der Vergangenheit nicht an Versuchen gefehlt hat, die Elektrolyte kontinuierlich zu verbessern.

Bei den bekannten Elektrolytsystemen wird üblicherweise zwischen flüssigen und festen Elektrolyten unterschieden, wobei feste Elektrolyte sowohl Polymerelektrolyte als auch Gel- oder Hybridelektrolyte umfassen.

Batteriezellen, die auf flüssigen Elektrolyten basieren, weisen im allgemeinen relativ gute ionische Leitfähigkeiten auf, neigen jedoch zum Auslaufen, was dann zur Freisetzung von Flüssigkeiten führt, die für Mensch und Umwelt potentiell gefährlich sind. Die Herstellung solcher Batteriezellen ist zudem in Hinblick auf die möglichen Größen und Formen dieser Zellen eingeschränkt.

Polymerelektrolyte basieren üblicherweise auf einem gegebenenfalls vernetzten Polymeren und einem Leitsalz. Herkömmliche Polymerelektrolyte zeigen jedoch häufig nur geringe ionische Leitfähigkeiten, die den hohen Anforderungen, welche an moderne Batterien gestellt werden, nicht gerecht werden.

Unter Gel- oder Hybridelektrolyten werden Elektrolytsysteme verstanden, die neben einem gegebenenfalls vernetztem Polymeren und einem Leitsalz ein Lösungsmittel enthalten. Die Vernetzung dieser Polymere wird dabei häufig bei relativ hohen Temperaturen in Gegenwart der Leitsalze durchgeführt. Die entsprechenden Leitsalze müssen daher in Lösung eine relativ hohe thermische Stabilität aufweisen, da anderenfalls die Gefahr ihrer Zersetzung und somit auch eine Verringerung der ionischen Leitfähigkeit des resultierenden Gelelektrolyten besteht.

Die DE 196 411 38 offenbart Lithiumfluorophosphate mit vorzugsweise perfluorierten oder teilfluorierten Ethyl- und Isopropylgruppen und deren Verwendung als Leitsalze in Batterien. Eine Verwendung dieser Salze als Leitsalze in Polymerelektrolyten wird nicht beschrieben. Die deutsche Patentanmeldung mit dem Aktenzeichen 100 08 955 beschreibt Lithiumfluoroalkylphosphate und deren Verwendung als Leitsalze in Batterien, Kondensatoren, Superkondensatoren und galvanischen Zellen. Polymerelektrolyte basierend auf diesen Salzen werden nicht offenbart.

Die der vorliegenden Erfindung zugrunde liegende Aufgabe bestand darin, Elektrolyte zur Verfügung zu stellen, die neben einer sehr guten ionischen Leitfähigkeit auch eine hohe thermische und elektrochemische Stabilität aufweisen.

Eine weitere Aufgabe der vorliegenden Erfindung war es, die Lebensdauer und die Leistung von Batterien, Kondensatoren, Superkondensatoren und galvanischen Zellen zu verlängern bzw. zu verbessern.

Überraschenderweise wird diese Aufgabe durch das zur Verfügung stellen von Gemischen gelöst, die

a) wenigstens ein Fluoroalkylphosphat-Salz der allgemeinen Formel (I)

$$M^{n+}\ ([PF_x(C_yF_{2y+1-z}H_z)_{6-x}]^-)_n \qquad (I)$$

worin
$M^{n+}$ ein einwertiges, zweiwertiges oder dreiwertiges Kation ist,

$$1 \leq x \leq 5,$$

$$1 \leq y \leq 8$$

und $0 \leq z \leq 2y + 1$ sind, n = 1, 2 oder 3 bedeutet und die Liganden $(C_yF_{2y+1-z}H_z)$ jeweils gleich oder verschieden sind und
b) wenigstens ein Polymeres
enthalten.

Ein Gemisch im Sinne der vorliegenden Erfindung schließt reine Mischungen der Komponenten a) und b), Mischungen, in denen das Salz der Komponente a) in dem Polymeren der Komponente b) eingeschlossen ist und Mischungen, in denen zwischen dem Salz der Komponente a) und dem Polymeren der Komponente b) chemische und/oder physikalische Bindungen bestehen ein.

Entsprechende Gemische aus wenigstens einem Leitsalz und wenigstens einem Polymeren werden üblicherweise auch als Polymerelektrolyte bezeichnet.

Die erfindungsgemäßen Gemische können auch jeweils zwei oder mehr Fluoroalkylphosphat-Salze der allgemeinen Formel (I) als Komponente a) und/oder zwei oder mehr Polymere der Komponente b) enthalten. Vorzugsweise enthalten die erfindungsgemäßen Gemische jeweils ein Fluoroalkylphosphat-Salz der allgemeinen Formel (I) als Komponente a) und ein Polymeres der Komponente b), da auf diese Weise eine besonders gute Reproduzierbarkeit der elektrochemischen Eigenschaften erzielt werden kann.

Als Komponente a) enthält das erfindungsgemäße Gemisch vorzugsweise Fluoroalkylphosphat-Salze der allgemeinen Formel (I), in denen $M^{n+}$ ein Lithium-Kation, Natrium-Kation, Kalium-Kation, Rubidium-Kation, Cäsium-Kation, Magnesium-Kation oder Aluminium-Kation ist. Besonders bevorzugt enthält das erfindungsgemäße Gemisch als Komponente a) solche Salze, in den $M^{n+}$ für ein Lithium-Kation steht.

Ebenfalls bevorzugt enthält das erfindungsgemäße Gemisch Fluoroalkylphosphat-Salze der allgemeinen Formel (I), in denen $M^{n+}$ für ein organisches Kation steht. Vorzugsweise ist das organische Kation ein Nitrosyl-Kation, ein Nitryl-Kation, ein Tropylium-Kation oder ein Kation der allgemeinen Formel $[NR_4]^+$, $[P(NR_2)_kR_{4-k}]^+$ mit $0 \leq k \leq 4$, $[C(NR_2)_3]^+$ oder $[CR_3]^+$ in denen jeweils die Substituenten R, gleich oder verschieden, für
H,

$$C_oF_{2o+1-p-q}H_pA_q$$

oder
A stehen,
worin
$1 \leq o \leq 10, 0 \leq p \leq 2o+1$, $0 \leq q \leq 2o+1$, vorzugsweise $1 \leq o \leq 6$, $0 \leq p \leq 2o+1$, $0 \leq q \leq 2o+1$, sind und A jeweils einen gegebenenfalls Heteroatome aufweisenden aromatischen Rest oder einen vorzugsweise 5 oder 6-gliedrigen Cycloalkyl-Rest bedeutet. Die Liganden $C_oF_{2o+1-p-q}H_pA_q$ können auch zumindest teilweise mit Chlor und/oder Brom, die Reste A auch zumindest teilweise mit Fluor, Chlor und/oder Brom substituiert sein.

Als aromatischer oder cycloaliphatischer Rest A, der gegebenenfalls Heteroatome aufweisen kann, können alle dem Fachmann bekannten, zur Herstellung von $[NR_4]^+$, $[P(NR_2)_kR_{4-k}]^+$ mit $0 \leq k \leq 4$, $[C(NR_2)_3]^+$ oder $[CR_3]^+$-Kationen geeigneten Aromaten, Heteroaromaten oder Cycloaliphaten eingesetzt werden.

Vorzugsweise steht A für einen 5- oder 6-gliedrigen, gegebenenfalls Stickstoff- und/oder Schwefel- und/oder Sauerstoffatome aufweisenden aromatischen oder cycloaliphatischen Rest, besonders bevorzugt für einen Phenyl- oder Pyridin-Rest.

Besonders bevorzugt enthalten die erfindungsgemäßen Gemische als Komponente a) Fluoroalkylphosphat-Salze der allgemeinen Formel (I) mit perfluorierten Liganden, d.h. Salze mit solchen Liganden, in denen $1 \leq x \leq 5$, $1 \leq y \leq 8$ und $z = 0$ sind.

In einer ganz besonders bevorzugten Ausführungsform der vorliegenden Erfindung enthalten die erfindungsgemäßen Gemische als Komponente a) ein oder mehrere Fluoralkylphosphatsalze ausgewählt aus der Gruppe bestehend aus:

$$Li^+[F_{6-x}P(CF_2\text{-}CF_3)_x]^- \text{ mit } 1 \leq x \leq 3,$$

$$Li^+[F_{6-x}P(CF_2\text{-}CF_2\text{-}CF_3)_x]^- \text{ mit } 1 \leq x \leq 3,$$

$$Li^+[F_{6-x}P(CF_2\text{-}CF_2\text{-}CF_2\text{-}CF_3)_x]^- \text{ mit } 1 \leq x \leq 3,$$

$$Li^+[F_{6-x}P(CF\text{-}(CF_3)_2)_x]^- \text{ mit } x = 1 \text{ oder } 2,$$

$$[N(C_2H_5)_4][PF_3(C_2F_5)_3],$$

$$[N(CH_3)_4][PF_3(C_4F_9)_3],$$

$$[P(N(CH_3)_2)_4][PF_3(C_2F_5)_3],$$

$$[P(N(CH_3)_2)_4][PF_3(C_4F_9)_3],$$

$$[P(CH_3)_4][PF_3(C_2F_5)_3)],$$

$$[P(C_2H_5)_4][PF_3(C_2F_5)_3]$$

$$[P(CH_3)_4][PF_3(C_4F_9)_3)],$$

$$[P(C_2H_5)_4][PF_3(C_4F_9)_3)],$$

$$[C(N(CH_3)_2)_3][PF_3(C_2F_5)_3] \text{ und}$$

$$[C(N(CH_3)_2)_3][PF_3(C_4F_9)_3].$$

Die Fluoroalkylphosphat-Salze der allgemeinen Formel (I) können durch Verfahren erhalten werden, gemäß denen wenigstens eine Verbindung der allgemeinen Formel (II) bis (VII)

$$H_rP(C_sH_{2s+1})_{3-r} \quad \text{(II)},$$

$$OP(C_sH_{2s+1})_3 \quad \text{(III)},$$

$$Cl_rP(C_sH_{2s+1})_{3-r} \quad \text{(IV)},$$

$$F_rP(C_sH_{2s+1})_{3-r} \quad \text{(V)},$$

$$Cl_tP(C_sH_{2s+1})_{5-t} \quad \text{(VI)}$$

und/oder

$$F_tP(C_sH_{2s+1})_{5-t} \quad \text{(VII)},$$

worin jeweils

$$0 \leq r \leq 2$$

$$3 \leq s \leq 8$$

und

$$0 \leq t \leq 4$$

bedeuten, durch Elektrolyse in Fluorwasserstoff fluoriert wird, das so erhaltene Gemisch der Fluorierungsprodukte aufgetrennt und das so erhaltene fluorierte Alkylphosphoran in einem aprotischen Lösungsmittel oder Lösungsmittelgemisch unter Feuchtigkeitsausschluß mit einer Verbindung der allgemeinen Formel (VIII),

$$M^{n+}(F^{-})_{n} \qquad \text{(VIII)}$$

worin $M^{n+}$ und n die oben angegebene Bedeutung haben, umgesetzt wird. Das so erhaltene Fluoroalkylphosphat-Salz der allgemeinen Formel (I) kann, falls notwendig, nach üblichen, dem Fachmann bekannten Methoden gereinigt und isoliert werden.

Vorzugsweise wird die Elektrolyse bei einer Temperatur von -20 bis +40 °C, besonders bevorzugt von -10 bis +10°C und ganz besonders bevorzugt bei -5 bis +5 °C durchgeführt. Der Druck beträgt vorzugsweise 0,5 bis 3 bar, besonders bevorzugt 0,5 bis 1,5 bar und ganz besonders bevorzugt Normaldruck.

Die angelegte Spannung während der Elektrolyse beträgt vorzugsweise 4 bis 6 V, besonders bevorzugt 4,5 bis 5,5 V, die Stromdichte beträgt vorzugsweise 0,2 bis 5 $A/dm^2$, besonders bevorzugt 0,2 bis 2 $A/dm^2$ und ganz besonders bevorzugt 0,5 bis 1,5 $A/dm^2$.

Die Verbindungen der allgemeinen Formel (IV) und/oder (VI) können vor der Elektrolyse in Fluorwasserstoff auch mit anorganischen Fluorierungsmitteln, vorzugsweise mit $SbF_3$, $SbF_5$, $MoF_5$, $VF_5$ oder Mischungen aus wenigstens zwei dieser Fluorierungsmittel umgesetzt werden, so daß ein Austausch der Chloratome durch Fluoratome erfolgt. Die Reaktionsbedingungen, unter denen diese Fluorierungen durchgeführt werden, sind dem Fachmann bekannt.

Die Umsetzung des fluorierten Alkylphosphorans mit einer Verbindung der allgemeinen Formel (VIII) erfolgt bevorzugt bei einer Temperatur von -35 bis 60°C, besonders bevorzugt bei -20 bis 50°C und ganz besonders bevorzugt bei -10 bis 25 °C.

Als Lösungsmittel werden für die Umsetzung der fluorierten Alkylphosphorane mit einer Verbindung der allgemeinen Formel (VIII) vorzugsweise Carbonate, Nitrile, Ether, Ester, Amide, Sulfone oder Gemische aus wenigstens zwei dieser Lösungsmittel eingesetzt.

Als Komponente b) enthält das erfindungsgemäße Gemisch vorzugsweise ein Homopolymeres oder Copolymeres von ungesättigten Nitrilen, vorzugsweise Acrylnitril, Vinylidenen, vorzugsweise Vinylidendifluorid, Acrylaten, vorzugsweise Methylacrylat, Methacrylaten, vorzugsweise Methylmethacrylat, zyklischen Ethern, vorzugsweise Tetrahydrofuran, Alkylenoxiden, vorzugsweise Ethylenoxid, Siloxan, Phosphazen, Alkoxysilanen oder eine organisch modifizierte Keramik oder eine Mischung aus wenigstens zwei der vorstehend genannten Homopolymeren und/oder Copolymeren und ggf. wenigstens einer organisch modifizierten Keramik.

Bevorzugt kommen als organisch modifizierte Keramiken anorganischorganische Hybridpolymere in Betracht, die durch Hydrolyse und Kondensation von organisch modifizierten Silizium-Alkoxiden und anschließende Vernetzung der am anorganischen Gerüst fixierten vernetzbaren Gruppen erhalten werden. Entsprechende organisch modifizierte Keramiken werden beispielsweise unter der Bezeichnung ORMOCERE® am Markt geführt.

In einer bevorzugten Ausführungsform enthält das erfindungsgemäße Gemisch als Komponente b) ein Homopolymeres oder Copolymeres von Vinylidendifluorid, Acrylnitril, Methyl(meth)acrylat und Tetrahydrofuran. In einer ganz besonders bevorzugten Ausführungsform liegt als Polymeres der Komponente b) ein Homopolymeres oder Copolymeres auf Basis von Vinylidendifluorid vor.

Entsprechende Homo- und Copolymerisate des Vinylidendifluorids werden beispielsweise unter der Bezeichnung Kynar® und Kynarflex® von der Firma Atofina Chemicals, Inc. sowie unter der Bezeichnung Solef® von der Firma Solvay am Markt geführt.

Die erfindungsgemäß zum Einsatz kommenden Polymere können auch zumindest teilweise vernetzt sein. Die Vernetzung kann mit bekannten Vernetzungsmitteln nach üblichen, dem Fachmann bekannten Methoden erfolgen. Die Vernetzung kann auch in Gegenwart der Komponente a) und ggf. weiterer Komponenten erfolgen.

In einer bevorzugten Ausführungsform der vorliegenden Erfindung enthält das Gemisch 5 bis 99 Gew.-% der Komponente a) und 95 bis 1 Gew.-% der Komponente b), besonders bevorzugt 60 bis 99 Gew.-% der Komponente a) und 40 bis 1 Gew.-% der Komponente b), jeweils bezogen auf die Summe der Komponenten a) und b).

Neben den Fluoroalkylphosphat-Salzen der allgemeinen Formel (I) sowie den Polymeren kann das erfindungsgemäße Gemisch zusätzlich ein Lösungsmittel oder ein Lösungsmittelgemisch aus zwei oder mehreren Lösungsmitteln aufweisen. Entsprechende Gemische aus einem Leitsalz, einem Polymer und zumindest einem Lösungsmittel werden üblicherweise auch als Gelelektrolyte bezeichnet.

Bevorzugte Lösungsmittel sind organische Carbonate, vorzugsweise Ethylencarbonat, Propylencarbonat, Butylencarbonat, Dimethylcarbonat, Diethylcarbonat, Ethylmethylcarbonat oder Methylpropylcarbonat, organische Ester, vorzugsweise Methylformiat, Ethylformiat, Methylacetat, Ethylacetat, Methylpropionat, Ethylpropionat, Methylbutyrat, Ethylbutyrat, γ-Butyrolacton, organische Ether, vorzugsweise Diethylether, Dimethoxyethan, Diethoxyethan, organische Amide, vorzugsweise Dimethylformamid oder Dimethylacetamid, schwefelhaltige Lösungsmittel, vorzugsweise Dimethylsulfoxid, Dimethylsulfit, Diethylsulfit oder Propansulton, aprotische Lösungsmittel, vorzugsweise Acetonitril, Acrylnitril oder Aceton, oder zumindest teilweise fluorierte Derivate der vorstehend genannten Lösungsmittel oder Gemische aus wenigstens zwei dieser Lösungsmittel und/oder fluorierten Derivaten dieser Lösungsmittel.

Ein weiterer Gegenstand der vorliegenden Erfindung ist ein Verfahren zur Herstellung der erfindungsgemäßen Gemische, gemäß dem zumindest eines der vorstehend genannten Fluoroalkylphosphatsalze der allgemeinen Formel (I) und wenigstens ein Polymeres und gegebenenfalls zumindest ein Lösungsmittel miteinander gemischt werden.

Vorzugsweise erfolgt das Mischen dieser Komponenten bei erhöhter Temperatur, bevorzugt bei 20 bis 90 °C, besonders bevorzugt bei 40 bis 60 °C, wobei die Temperaturen in Abhängigkeit von den eingesetzten Komponenten variieren können.

Ein weiterer Gegenstand der vorliegenden Erfindung ist die Verwendung wenigstens eines erfindungsgemäßen Gemisches in Elektrolyten, primären Batterien, sekundären Batterien, Kondensatoren, Superkondensatoren und/oder galvanischen Zellen, ggf. auch in Kombination mit weiteren, bekannten Leitsalzen und/oder Zusatzstoffen.

Weitere Gegenstände der Erfindung sind Elektrolyte, primäre und sekundäre Batterien, Kondensatoren, Superkondensatoren und galvanische Zellen, die wenigstens ein erfindungsgemäßes Gemisch und ggf. weitere Leitsalze und/oder Zusatzstoffe enthalten. Weitere Leitsalze und Zusatzstoffe sind dem Fachmann z.B. aus Doron Auerbach, Nonaqueous Electrochemistry, Marc Dekker Inc., New York 1999; D.Linden, Handbook of Batteries, Second Edition, McGraw-Hill Inc., New York 1995 und G. Mamantov und A.I. Popov, Chemistry of Nonaqueous Solutions, Current Progress, VCH Verlagsgesellschaft, Weinheim 1994 bekannt. Sie werden hiermit als Referenz eingeführt und gelten als Teil der Offenbarung.

Die erfindungsgemäßen Gemische können die Fluoroalkylphosphatsalze der allgemeinen Formel (I) auch in Anteilen zwischen 1 und 99 Gew.-% in Kombination mit anderen Leitsalzen, die in elektrochemischen Zellen Anwendung finden, aufweisen. Geeignet sind z.B. Leitsalze ausgewählt aus der Gruppe $LiPF_6$, $LiBF_4$, $LiClO_4$, $LiAsF_6$, $LiCF_3SO_3$, $LiN(CF_3SO_2)_2$, $LiC(CF_3SO_2)_3$, $LiN(SO_2C_2F_5)_2$ und $Li[B(O_4C_2)_2]$ sowie Mischungen aus wenigstens zwei dieser Verbindungen.

Die entsprechenden Elektrolyte können neben den erfindungsgemäßen Gemischen ferner auch organische Isocyanate (DE 199 44 603) zur Herabsetzung des Wassergehaltes enthalten.

Auch Verbindungen der allgemeinen Formel

$$[([R^1(CR^2R^3)_k]_lA_x)_yKt]^+\ {}^-N(CF_3)_2$$

wobei

Kt N, P, As, Sb, S, Se

A N, P, P(O), O, S, S(O), $SO_2$, As, As(O), Sb, Sb(O)

$R^1$, $R^2$ und $R^3$

gleich oder verschieden

H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,

A kann in verschiedenen Stellungen in $R^1$, $R^2$ und/oder $R^3$ eingeschlossen sein,

Kt kann in cyclischen oder heterocyclischen Ring eingeschlossen sein, die an Kt gebundenen Gruppen können gleich oder verschieden sein mit

n 1-18

m 3-7

k 0, 1-6

l 1 oder 2 im Fall von x=1 und 1 im Fall x=0

x 0,1

y 1-4

bedeuten, können enthalten sein (DE 9941566). Das Verfahren zur Herstellung der Verbindungen ist dadurch gekennzeichnet, daß ein Alkalisalz der allgemeinen Formel

$$D^{+}\ {}^{-}N(CF_3)_2$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+}\ {}^{-}E$$

wobei
Kt, A, $R^1$, $R^2$, $R^3$, k, l, x und y die oben angegebene Bedeutung haben und

$^-E$ $F^-$, $Cl^-$, $Br^-$, $I^-$, $BF_4^-$, $ClO_4^-$, $AsF_6^-$, $SbF_6^-$ oder $PF_6^-$

bedeutet, umgesetzt wird.
Die erfindungsgemäßen Gemische können auch in Elektrolyten enthalten sein, die Verbindungen der Formel

$$X\text{-}(CYZ)_m\text{-}SO_2N(CR^1R^2R^3)_2$$

mit

| | |
|---|---|
| X | H, F, Cl, $C_nF_{2n+1}$, $C_nF_{2n-1}$, $(SO_2)_kN(CR^1R^2R^3)_2$ |
| Y | H, F, Cl |
| Z | H, F, Cl |
| $R^1$, $R^2$, $R^3$ | H und/oder Alkyl, Fluoralkyl, Cycloalkyl |
| m | 0-9 und falls X=H, m≠0 |
| n | 1-9 |
| k | 0, falls m=0 und k=1, falls m=1-9 |

enthalten, dagestellt dadurch, daß teil- oder perfluorierte Alkysulfonylfluoride mit Dimethylamin in organischen Lösungsmitteln umgesetzt werden
(DE 199 466 73).

Auch Lithiumkomplexsalze der Formel

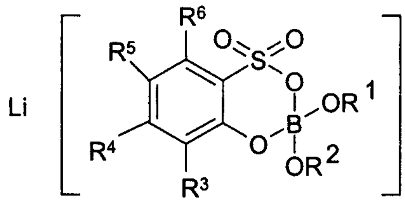

wobei

$R^1$ und $R^2$ gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann, haben,

oder jeweils einzeln oder gemeinsam die Bedeutung eines aromatischen heterocyclischen Rings aus der Gruppe Pyridyl, Pyrazyl oder Pyrimidyl, der unsubstituiert oder ein- bis vierfach durch Alkyl ($C_1$ bis $C_6$), Alkoxy-

gruppen ($C_1$ bis $C_6$) oder Halogen (F, Cl, Br) substituiert sein kann, haben,
oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,

$R^3$-$R^6$ können jeweils einzeln oder paarweise, gegebenenfalls durch eine Einfach- oder Doppelbindung direkt miteinander verbunden, folgende Bedeutung haben:

1. Alkyl ($C_1$ bis $C_6$),Alkyloxy ($C_1$ bis $C_6$) oder Halogen (F, Cl, Br)
2. ein aromatischer Ring aus den Gruppen

Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,
Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,
die über folgendes Verfahren (DE 199 32 317) dargestellt werden

a) 3-, 4-, 5-, 6-substituiertes Phenol in einem geeigneten Lösungsmittel mit Chlorsulfonsäure versetzt wird,
b) das Zwischenprodukt aus a) mit Chlortrimethylsilan umgesetzt, filtriert und fraktioniert destilliert wird,
c) das Zwischenprodukt aus b) mit Lithiumtetramethanolat-borat(1-), in einem geeigneten Lösungsmittel umgesetzt und daraus das Endprodukt isoliert wird, können im Elektrolyten enthalten sein.

Auch Elektrolyte mit Komplexsalzen der allgemeinen Formel (DE 199 51 804) $M^{x+}[EZ]^{y-}_{x/y}$ worin bedeuten:

x,y 1,2,3,4,5,6
$M^{x+}$ ein Metallion
E eine Lewis-Säure, ausgewählt aus der Gruppe

$BR^1R^2R^3$, $AlR^1R^2R^3$, $PR^1R^2R^3R^4R^5$, $AsR^1R^2R^3R^4R^5$, $VR^1R^2R^3R^4R^5$,

$R^1$ bis $R^5$ gleich oder verschieden, gegebenenfalls durch eine Einfach- oder Doppelbildung direkt miteinander verbunden sind, jeweils einzeln oder gemeinsam die Bedeutung

eines Halogens (F, Cl, Br),
eines Alkyl- oder Alkoxyrestes ($C_1$ bis $C_8$) der teilweise oder vollständig durch F, Cl, Br substituiert sein kann,
eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann
eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und

Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$,

$OCOR^6$, wobei

$R^6$ bis $R^8$ gleich oder verschieden sind, gegebenenfalls durch eine Einfach- oder Doppelbindung direkt miteinander verbunden sind, jeweils einzeln oder gemeinsam die Bedeutung

eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Boratsalze (DE 199 59 722) der allgemeinen Formel

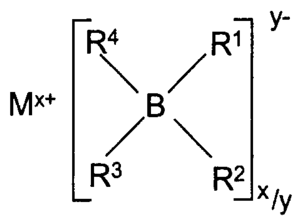

worin bedeuten:

M ein Metallion oder Tetraalkylammoniumion
x,y 1, 2, 3, 4, 5 oder 6

$R^1$ bis $R^4$ gleich oder verschieden, gegebenenfalls durch eine Einfach- oder Doppelbindung direkt miteinander verbundener Alkoxy- oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Auch Additive wie Silanverbindungen der allgemeinen Formel

$$SiR^1R^2R^3R^4$$

mit $R^1$ bis $R^4$ H

$$C_yF_{2y+1-z}H_z$$

$$OC_yF_{2y+1-z}H_z$$

$$OC(O)C_yF_{2y+1-z}H_z$$

$$OSO_2C_yF_{2y+1-z}H_z$$

und

$$1 \leq x < 6$$

$$1 \leq y \leq 8$$

und

$$0 \leq z \leq 2y+1$$

und
$R^1$-$R^4$ gleich oder verschieden

mit der Bedeutung eines aromatischen Rings aus der Gruppe Phenyl, Naphthyl der unsubstituiert oder ein- oder mehrfach durch F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, N $(C_nF_{2n+1-z}H_z)_2$ substituiert sein kann, oder
mit der Bedeutung eines heterocyclischen aromatischen Rings aus der Gruppe Pyridyl, Pyrazyl oder Pyrimidyl,

die jeweils ein- oder mehrfach mit F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein können (DE 100 276 26), können enthalten sein.

Die erfindungsgemäßen Gemische können auch in Elektrolyten eingesetzt werden, die Salze der Formel $Li[P(OR^1)_a(OR^2)_b(OR^3)_c(OR^4)_dF_e]$ worin $0 < a+b+c+d \leq 5$ und $a+b+c+d+e=6$ gilt, und $R^1$ bis $R^4$ unabhängig voneinander Alkyl-, Aryl- oder Heteroarylreste sind, wobei mindestens zwei von $R^1$ bis $R^4$ durch eine Einfach- oder Doppelbindung direkt miteinander verbunden sein können, enthalten (DE 100 16 801). Dargestellt werden die Verbindungen durch Umsetzung von Phosphor (V) -Verbindungen der allgemeinen Formel

$$P(OR^1)_a(OR^2)_b(OR^3)_c(OR^4)_dF_e$$

worin $0 < a+b+c+d \leq 5$ und $a+b+c+d+e=5$ gilt, und $R^1$ bis $R^4$ die oben angegebenen Bedeutungen haben mit Lithiumfluorid in Gegenwart eines organischen Lösungsmittels.

Auch Ionische Flüssigkeiten der allgemeinen Formel

$$K^+A^-$$

worin bedeuten:

$K^+$ ein Kation ausgewählt aus der Gruppe

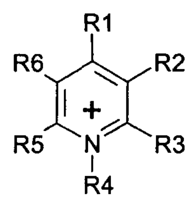
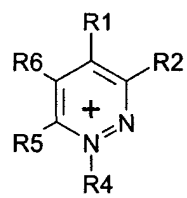
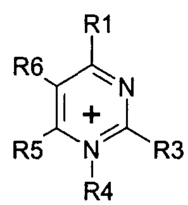
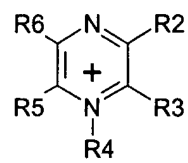
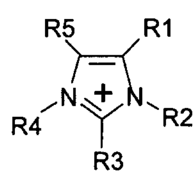
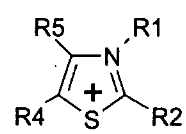
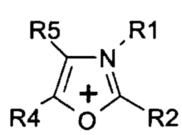
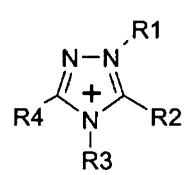

wobei $R^1$ bis $R^5$ gleich oder verschieden, gegebenenfalls durch eine Einfach- oder Doppelbindung direkt miteinander verbunden sind und jeweils einzeln oder gemeinsam folgende Bedeutung haben:

- H,
- Halogen,
- Alkylrest ($C_1$ bis $C_8$) der teilweise oder vollständig durch weitere Gruppen, vorzugsweise F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann

und

$A^-$ ein Anion ausgewählt aus der Gruppe

$$[B(OR^1)_n(OR^2)_m(OR^3)_o(OR^4)_p]^-$$

mit 0≤n, m, o, p≤4 und

$$m+n+o+p=4$$

wobei $R^1$ bis $R^4$ verschieden oder paarweise gleich sind, gegebenenfalls durch eine Einfach- oder Doppelbildung direkt miteinander verbunden sind, jeweils einzeln oder gemeinsam

die Bedeutung eines aromatischen Rings aus der Gruppe Phenyl, Naphthyl, Anthracenyl oder Phenanthrenyl, der unsubstituiert oder ein- oder mehrfach durch $C_nF_{(2n+1-x)}H_x$ mit 1<n<6 und 0<x≤13 oder Halogen (F, Cl, Br) substituiert sein kann, besitzen,
die Bedeutung eines aromatischen heterocyclischen Rings aus der Gruppe Pyridyl, Pyrazyl oder Pyrimidyl, der unsubstituiert oder ein- oder mehrfach durch $C_nF_{(2n+1-x)}H_x$ mit 1<n<6 und 0<x≤13 oder Halogen oder Halogen (F, Cl, Br) substituiert sein kann, besitzen,
die Bedeutung eines Alkylrests ($C_1$ bis $C_8$) der teilweise oder vollständig durch weitere Gruppen, vorzugsweise F, Cl $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann, besitzen,

beziehungsweise $OR^1$ bis $OR^4$
einzeln oder gemeinsam die Bedeutung eines aromatischen oder aliphatischen Carboxyl-, Dicarboxyl-, Oxysulfonyl- oder Oxycarboxylrests, der teilweise oder vollständig durch weitere Gruppen, vorzugsweise F, Cl, , $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann, besitzen (DE 100 265 65), können im Elektrolyten enthalten sein. Auch Ionische Flüssigkeiten $K^+A^-$ mit $K^+$ definiert wie oben und

$A^-$ ein Anion ausgewählt aus der Gruppe

$$\left[ PF_x(C_yF_{2y+1-z}H_z)_{6-x} \right]^-$$

und

$$1 \leq x < 6$$

$$1 \leq y \leq 8$$

und

$$0 \leq z \leq 2y+1$$

können enthalten sein (DE 100 279 95).
Die erfindungsgemäßen Gemische können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,
b) die Suspension mit Kohlenwasserstoffen mit $C_5$-$C_{12}$ emulgiert werden,
c) die Emulsion auf die Metall- oder Legierungskerne aufgefällt werden und
d) durch Temperung des Systems die Metallhydroxide bzw. -oxihydroxide in das entsprechende Oxid übergeführt werden.

Die erfindungsgemäßen Gemische können auch in Elektrolyte für elektrochemische Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) beschichtet sind, indem die Partikel in einem organischen Lösungsmittel suspendiert werden, die Suspension mit einer Lösung einer hydrolisierbaren Metallverbindung und einer Hydrolyselösung versetzt und danach die beschichteten Partikel abfiltriert, getrocknet und gegebenenfalls calciniert werden. Sie können auch aus Lithium-Mischoxid-Partikel bestehen, die mit einem oder mehreren Polymeren (DE 199 46 066) beschichtet sind, erhalten durch ein Verfahren, bei dem die Partikel in einem Lösungsmittel suspendiert werden und anschließend die beschichteten Partikel abfiltriert, getrocknet und gegebenenfalls calciniert werden. Ebenso können die erfindungsgemäßen Gemische in Systemen mit Kathoden eingesetzt werden, die aus Lithium-Mischoxid-Partikeln bestehen, die mit Alkalimetallverbindungen und Metalloxiden ein- oder mehrfach beschichtet sind (DE 100 14 884). Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden. Ebenso können die erfindungsgemäßen Gemische in Systemen eingesetzt werden, die Anodenmaterialien mit dotiertem Zinnoxid enthalten (DE 100 257 61). Dieses Anodenmaterial wird hergestellt indem

a) eine Zinnchlorid-Lösung mit Harnstoff versetzt wird,
b) die Lösung mit Urotropin und einer geeigneten Dotierverbindung versetzt wird,
c) das so erhaltene Sol in Petrolether emulgiert wird,
d) das erhaltene Gel gewaschen und das Lösungsmittel abgesaugt sowie
e) das Gel getrocknet und getempert wird.

Ebenso können die erfindungsgemäßen Gemische in Systemen eingesetzt werden, die Anodenmaterialien mit reduziertem Zinnoxid enthalten (DE 100 257 62). Dieses Anodenmaterial wird hergestellt indem

a) eine Zinnchlorid-Lösung mit Harnstoff versetzt wird,
b) die Lösung mit Urotropin versetzt wird,
c) das so erhaltene Sol in Petrolether emulgiert wird,
d) das erhaltene Gel gewaschen und das Lösungsmittel abgesaugt wird,
e) das Gel getrocknet und getempert wird und
f) das erhaltene $SnO_2$ in einem begasbaren Ofen einem reduzierendem Gasstrom ausgesetzt wird.

Die erfindungsgemäßen Gemische haben den Vorteil, daß sie über einen sehr breiten Temperaturbereich keinerlei oder fast keine Anzeichen einer hydrolytischen Zersetzung zeigen. Neben einer hohen thermischen und elektrochemischen Stabilität weisen sie auch eine sehr gute ionische Leitfähigkeit auf.

Diese Eigenschaften ermöglichen es, Batterien, Kondensatoren, Superkondensatoren und galvanische Zellen, die diese erfindungsgemäßen Salze oder Gemische enthalten auch unter extremen Bedingungen einzusetzen, wie z.B. bei hohen Temperaturen, ohne daß deren Lebensdauer und Leistung durch diese Bedingungen beeinträchtigt wird.

Des weiteren zeichnen sich die entsprechenden Batterien, Kondensatoren, Superkondensatoren und galvanischen Zellen durch eine sehr gute Spannungskonstanz, eine uneingeschränkte Funktionsfähigkeit über viele Lade-Entlade-Zyklen sowie durch geringere Herstellungskosten aus.

Der Einsatz der erfindungsgemäßen Gemische in großen Batterien, wie sie z.B. in Elektrostraßenfahrzeugen oder Hybridstraßenfahrzeugen verwendet werden, ist ebenfalls sehr vorteilhaft, da bei einer Beschädigung der Batterien, wie z.B. im Falle eines Unfalls, auch bei Kontakt mit Wasser, beispielsweise durch Luftfeuchtigkeit oder Löschwasser kein toxischer und stark ätzender Fluorwasserstoff gebildet wird.

Im folgenden wird die Erfindung anhand von Beispielen erläutert. Diese Erläuterungen sind lediglich beispielhaft und schränken den allgemeinen Erfindungsgedanken nicht ein.

**Beispiele**

**Beispiel 1:**

Synthese eines $Li[PF_3(C_2F_5)_3]$-Polymer-Elektrolyten

1. Stufe Synthese von Tris-(pentafluorethyl)-difluorophosphoran

Zur Synthese von Tris-(pentafluorethyl)-difluorophosphoran wurde ein zylindrisches Doppelwandgefäß aus Edelstahl mit einem Gesamtvolumen von 1,5 Litern als Elektrolysezelle verwendet. Diese Elektrolysezelle wurde mit einer Nickelkathode und einer Nickelanode versehen, die jeweils eine effektive Kathoden- bzw. Anodenfläche von 3,75 $dm^2$ aufwiesen einen auf eine Temperatur von -20°C gekühlten Rückflußkühler. Die Temperatur der Elektrolysezelle betrug 0°C.

In der Elektrolysezelle wurden zunächst 1125 g flüssiger Fluorwasserstoff über 100 Stunden vorelektrolysiert. Anschließend wurden insgesamt 69 g Triethylphospin in Teilmengen zugegeben.

Die Elektrolysespannung betrug 4,4 bis 5,4 V, die Stromdichte 0,30 bis 0,53 $A/dm^2$ mit einem Gesamtumsatz von 2918,4 Ah (entsprechend 146,5 % der Theorie). Die flüssigen Elektrolyseprodukte sind in Fluorwasserstoff unlöslich und wurden durch Phasenseparierung von dem Fluorwasserstoff abgetrennt. Das so erhaltene Rohprodukt wurde dann durch fraktionierte Destillation bei vermindertem Druck gereinigt und isoliert.

2. Stufe Synthese von Lithiumtris(pentafluorethyl)trifluorophosphat

In einem Teflon-Gefäß wurde eine Suspension bestehend aus 0,86 bis 1,56 g (0,033 bis 0,06 mol) Lithiumfluorid in 30 ml eines Gemisches aus Ethylencarbonat und Dimethylcarbonat im Verhältnis 1:1 (Volumen/Volumen) vorgelegt. Unter Feuchtigkeitsausschluß wurden bei einer Temperatur von 0 bis 25 °C (zu Beginn der Umsetzung wurde auf 0°C gekühlt, dann ließ man die Temperatur langsam auf ca. 20 bis 25 °c ansteigen) 12,78 g (0,03 mol) gemäß der 1. Stufe hergestelltes Tris(pentafluorethyl)-difluorophosphoran zu dieser Suspension gegeben. Die so erhaltene Lösung wurde anschließend bis zum Verschwinden der anfänglich vorhandenen Phasengrenze gerührt und überschüssiges Lithiumfluorid wurde abfiltriert.

3. Stufe Herstellung des $Li[PF_3(C_2F_5)_3]$-Polymer-Elektrolyten

Zu 20 g der gemäß der 2. Stufe erhaltenen Lösung wurden 1 g ( 5 Gew.-%) vernetztes Polyvinylidendifluorid-Copolymer (Kynarflex® , Atofina Chemicals, Inc.) gegeben.

Anschließend wurde die Suspension auf eine Temperatur von 50 bis 60 °C bis zur vollständigen Lösung des Copolymeren erhitzt und dann auf Raumtemperatur abgekühlt.

Hierbei läßt sich die Konsistenz des Polymerelektrolyten über den Anteil des Copolymeren steuern. Bis zu einer Konzentration von ca. 3 Gew.-% des Copolymeren wird ein hochviskoser flüssiger Elektrolyt erhalten. Bei einer Konzentration von ca. 3 bis ca. 10 Gew% des Copolymeren wird ein gelartiger Elektrolyt, ab einer Konzentration von ca. 10 Gew.-% wird ein fester Polymerelektrolyt erhalten.

**Beispiel 2:**

Synthese eines $Li[PF_3(n-C_4F_9)_3]$-Polymer-Elektrolyten

Die Synthese von Tris-(nonafluor-n-butyl)-difluorophosphoran erfolgte gemäß Beispiel 1 (1. Stufe) aus Tris-n-butylphosphin. Lithium-tris-(nonafluor-n-butyl)-trifluorophosphat wurde gemäß der 2. Stufe nach Beispiel 1 hergestellt.

Die Herstellung des $Li[PF_3(n-C_4F_9)_3]$-Polymer-Elektrolyten erfolgte gemäß der 3. Stufe aus Beispiel 1.

**Beispiel 3:**

Untersuchung der thermischen Stabilität der Elektrolyte

Die Untersuchung der thermischen Stabilität erfolgt mit Hilfe von DSC-(Differential-Scanning-Calometry). Die

jeweiligen Elektrolyte wurden in einem Gerät mit der Bezeichnung Universal V 2.4F von der Firma TA Instruments aufgeheizt. Die Heizrate betrug 4 °C pro Minute.

Der gemäß Beispiel 1 hergestellte $Li[PF_3(C_2F_5)_3]$-Polymer-Elektrolyt zeigte eine Zersetzungstemperatur von > 200 °C.

## Patentansprüche

1. Gemisch enthaltend

   a) wenigstens ein Fluoroalkylphosphat-Salz der allgemeinen Formel (I)

   $$M^{n+}\ ([PF_x(C_yF_{2y+1-z}H_z)_{6-x}]^-)_n \qquad (I)$$

   worin
   $M^{n+}$ ein einwertiges, zweiwertiges oder dreiwertiges Kation ist,

   $$1 \leq x \leq 5,$$

   $$1 \leq y \leq 8$$

   und $0 \leq z \leq 2y + 1$ sind, n = 1, 2 oder 3 bedeutet und die Liganden $(C_yF_{2y+1-z}H_z)$ jeweils gleich oder verschieden sind
   und
   b) wenigstens ein Polymeres.

2. Gemisch gemäß Anspruch 1, **dadurch gekennzeichnet, daß** $M^{n+}$ ein Lithium-Kation, Natrium-Kation, Kalium-Kation, Rubidium-Kation, Cäsium-Kation, Magnesium-Kation oder Aluminium-Kation, vorzugsweise ein Lithium-Kation ist.

3. Gemisch gemäß Anspruch 1, **dadurch gekennzeichnet, daß** $M^{n+}$ ein organisches Kation, vorzugsweise ein Nitrosyl-Kation, ein Nitryl-Kation oder ein Kation der allgemeinen Formel $[NR_4]^+$, $[P(NR_2)_kR_{4-k}]^+$ mit $0 \leq k \leq 4$, $[C(NR_2)_3]^+$ oder $[CR_3]^+$ ist, worin jeweils die Reste R, gleich oder verschieden, für
   H,

   $$C_oF_{2o+1-p-q}H_pA_q$$

   oder
   A stehen,
   worin
   $1 \leq o \leq 10$, $0 \leq p \leq 2o+1$ und $0 \leq q \leq 2o+1$ sind, und A jeweils einen gegebenenfalls Heteroatome aufweisenden aromatischen Rest oder einen vorzugsweise 5- oder 6-gliedrigen Cycloalkyl-Rest bedeutet.

4. Gemisch gemäß Anspruch 3, **dadurch gekennzeichnet, daß** $1 \leq o \leq 6$, $0 \leq p \leq 2o+1$ und $0 \leq q \leq 2o+1$ sind, und A jeweils einen gegebenenfalls Heteroatome aufweisenden aromatischen Rest oder einen vorzugweise 5-oder 6-gliedrigen Cycloalkyl-Rest bedeutet.

5. Gemisch gemäß Anspruch 3 oder 4, **dadurch gekennzeichnet, daß** A ein 5- oder 6-gliedriger, ggf. Stickstoff- und/oder Schwefel- und/oder Sauerstoffatome aufweisender aromatischer Rest oder Cycloalkyl-Rest, vorzugsweise ein substituierter Phenyl- oder Pyridin-Rest ist.

6. Gemisch gemäß einem der Ansprüche 1 bis 5, **dadurch gekennzeichnet, daß** $1 \leq x \leq 5$, $1 \leq y \leq 8$ und $z = 0$ ist.

7. Gemisch gemäß einem der Ansprüche 1 bis 6, **dadurch gekennzeichnet, daß** als Komponente a) ein oder mehrere Fluoralkylphosphatsalze ausgewählt aus der Gruppe bestehend aus:

$$Li^+[F_{6-x}P(CF_2\text{-}CF_3)_x]^- \text{ mit } 1 \le x \le 3,$$

$$Li^+[F_{6-x}P(CF_2\text{-}CF_2\text{-}CF_3)_x]^- \text{ mit } 1 \le x \le 3,$$

$$Li^+[F_{6-x}P(CF_2\text{-}CF_2\text{-}CF_2\text{-}CF_3)_x]^- \text{ mit } 1 \le x \le 3,$$

$$Li^+[F_{6-x}P(CF\text{-}(CF_3)_2)_X]^- \text{ mit } x = 1 \text{ oder } 2,$$

$$[N(C_2H_5)_4][PF_3(C_2F_5)_3],$$

$$[N(CH_3)_4][PF_3(C_4F_9)_3],$$

$$[P(N(CH_3)_2)_4][PF_3(C_2F_5)_3],$$

$$[P(N(CH_3)_2)_4][PF_3(C_4F_9)_3],$$

$$[P(CH_3)_4][PF_3(C_2F_5)_3)],$$

$$[P(C_2H_5)_4][PF_3(C_2F_5)_3]$$

$$[P(CH_3)_4][PF_3(C_4F_9)_3)],$$

$$[P(C_2H_5)_4][PF_3(C_4F_9)_3)],$$

$$[C(N(CH_3)_2)_3][PF_3(C_2F_5)_3] \text{ und}$$

$$[C(N(CH_3)_2)_3][PF_3(C_4F_9)_3] \text{ vorliegen.}$$

**8.** Gemisch gemäß einem der Ansprüche1 bis 7, **dadurch gekennzeichnet, daß** die Komponente b) ein Homopolymeres oder Copolymeres von ungesättigten Nitrilen, vorzugsweise Acrylnitril, Vinylidenen, vorzugsweise Vinylidendifluorid, Acrylaten, vorzugsweise Methylacrylat, Methacrylaten, vorzugsweise Methylmethacrylat, zyklischen Ethern, vorzugsweiseTetrahydrofuran, Alkylenoxiden, vorzugsweise Ethylenoxid, Siloxan, Phosphazen, Alkoxysilanen oder eine organische modifizierte Keramik oder eine Mischung aus wenigstens zwei der vorstehend genannten Homopolymeren und/oder Copolymeren und ggf. wenigstens einer organisch modifizierten Keramik ist.

**9.** Gemisch gemäß Anspruch 8, **dadurch gekennzeichnet, daß** die Komponente b) ein Homopolymeres oder Copolymeres von Vinylidendifluorid, Acrylnitril, Methyl(meth)acrylat, Tetrahydrofuran, vorzugsweise ein Homopolymeres oder Copolymeres von Vinylidendifluorid ist.

**10.** Gemisch gemäß einem der Ansprüche 1 bis 9, **dadurch gekennzeichnet, daß** das Polymere zumindest teilweise vernetzt ist.

**11.** Gemisch gemäß einem der Ansprüche 1 bis 10, **dadurch gekennzeichnet, daß** es 5 bis 99 Gew.-% der Komponente a) und 95 bis 1 Gew.-% der Komponente b), vorzugsweise 60 bis 99 Gew.-% der Komponente a) und 40 bis 1 Gew.-% der Komponente b), jeweils bezogen auf die Summe der Komponenten a) und b) enthält.

**12.** Gemisch gemäß einem der Ansprüche 1 bis 11, **dadurch gekennzeichnet, daß** es zusätzlich wenigstens ein Lösungsmittel enthält.

**13.** Gemisch gemäß Anspruch 12, **dadurch gekennzeichnet, daß** es als Lösungsmittel ein organisches Carbonat, vorzugsweise Ethylencarbonat, Propylencarbonat, Butylencarbonat, Dimethylcarbonat, Diethylcarbonat, Ethylmethylcarbonat oder Methylpropylcarbonat, einen organischen Ester, vorzugsweise Methylformiat, Ethylformiat, Methylacetat, Ethylacetat, Methylpropionat, Ethylpropionat, Methylbutyrat, Ethylbutyrat, γ-Butyrolacton, einen organischen Ether, vorzugsweise Diethylether, Dimethoxyethan, Diethoxyethan, ein organisches Amid, vorzugsweise Dimethylformamid oder Dimethylacetamid, ein schwefelhaltiges Lösungsmittel, vorzugsweise Dimethylsulfoxid, Dimethylsulfit, Diethylsulfit oder Propansulton, ein aprotisches Lösungsmittel, vorzugsweise Acetonitril, Acrylnitril oder Aceton, oder zumindest teilweise fluorierte Derivate der vorstehend genannten Lösungsmittel oder Gemische aus wenigstens zwei dieser Lösungsmittel und/oder fluorierten Derivaten dieser Lösungsmittel enthält.

**14.** Verfahren zur Herstellung eines Gemisches gemäß den Ansprüchen 1 bis 13, **dadurch gekennzeichnet, daß** man wenigstens ein Fluoroalkylphosphatsalz der allgemeinen Formel (I) und wenigstens ein Polymeres und ggf. wenigstens ein Lösungsmittel mischt.

**15.** Verfahren gemäß Anspruch 14, **dadurch gekennzeichnet, daß** das Mischen bei erhöhter Temperatur, vorzugsweise bei 20 bis 90°C, besonders bevorzugt von 40 bis 60 °C erfolgt.

**16.** Verwendung wenigstens eines Gemisches gemäß den Ansprüchen 1 bis 13 in Elektrolyten, primären Batterien, sekundären Batterien, Kondensatoren, Superkondensatoren oder galvanischen Zellen.

**17.** Elektrolyte enthaltend wenigstens ein Gemisch gemäß einem der Ansprüche 1 bis 13.

**18.** Primäre Batterien enthaltend wenigstens ein Gemisch gemäß einem der Ansprüche 1 bis 13.

**19.** Sekundäre Batterien enthaltend wenigstens ein Gemisch gemäß einem der Ansprüche 1 bis 13.

**20.** Kondensatoren enthaltend wenigstens ein Gemisch gemäß einem der Ansprüche 1 bis 13.

**21.** Superkondensatoren enthaltend wenigstens ein Gemisch gemäß einem der Ansprüche 1 bis 13.

**22.** Galvanische Zellen enthaltend wenigstens ein Gemisch gemäß einem der Ansprüche 1 bis 13.